# NEW EUROPEAN PATENT SPECIFICATION

(11) **EP 0 362 148 B2**
(45) Date of publication and mention of the opposition decision: **03.02.1999**
(45) Mention of the grant of the patent: 20.04.1994
(21) Application number: 89830334.2
(22) Date of filing: 18.07.1989
(51) Int. Cl.: B62D 33/023

(54) **Section-member assembly for forming truck side-boards**
Bordwand-Querschnittselemente für Lastfahrzeug
Eléments de section de volet de ridelle de camion

(30) Priority: 29.09.1988 IT 2212888
(43) Date of publication of application: 04.04.1990
(73) Proprietor: METRA METALLURGICA TRAFILATI ALLUMINIO S.p.A., I-25050 Rodengo Saiano (Brescia) (IT)
(72) Inventor: Giacomelli, Mario Metra Metallurgica, I-25050- Rodengo Saiano (Brescia) (IT)
(74) Representative: Cicogna, Franco

(56) References cited:
- WO-A-80/02268
- CH-A- 345 256
- CH-A- 481 785
- DE-A- 3 529 662
- DE-A- 3 538 188
- DE-U- 8 605 022
- DE-U- 8 633 232
- FR-A- 1 497 184
- FR-E- 86 144

## Description

### BACKGROUND OF THE INVENTION

The present invention relates to a section member assembly for making side-boards for trucks and the like.

As is known, the truck bodies are usually provided with side and rear boards, either of the tiltable or not tiltable type, which can be advantageously made by using metal section members to be suitably mutually coupled.

Also known is the fact that presently available section members for the above mentioned use can be assembled, depending on their perimetrical cross-sections, either by rotation or by mutual fixedly restraining them.

This fact makes rather difficult both the assembling of the section members and the removal of possible damaged section members for replacing purposes.

The document FR-A-1 497 184, which is considered the most pertinent background art, and on which the preamble of the main claim has been based, discloses a section member which has an end portion having an open part and an opposite end portion having a closed part of less width so as to provide the possibility of connecting two like section members by introducing the closed part of a section member into the open part of the other. On the outer sides of the closed part and on the inner sides of the open part there are herein provided teeth for restraining the connected section members.

In this document, both the teeth on the outer side of the closed portion and the teeth of the inner side of the open portion are symmetrical and have the same configuration.

Because of this configuration, the connection of two section members as taught in this prior document can be exclusively performed by translating a section member with respect to the other after having perfectly aligned the closed part of a section member with the open part of the other section member. In order to connect two section members of the type taught by this prior art document, it is accordingly necessary to exert a force directed in the approaching movement direction of the two mutually aligned section members. Such a connection operation, on the other hand, may be easily performed only when the height or level at which is arranged the overlaying section member is small for the operator who, on the other hand, would not be able of exerting on the section members a sufficient force to properly connect them. Moreover, if dirt or other materials enter inside the open portion, then the force necessary for coupling the section members could be excessive, and would impair the effort which should be provided by such a connection.

### SUMMARY OF THE INVENTION

Accordingly, the present invention sets out to overcome the above mentioned drawbacks, by providing a section member assembly which can be advantageously used for making side-boards of trucks and the like.

Within the scope of the above mentioned aim, a main object of the present invention is to provide such a section member assembly the individual section members of which can be assembled either by a rotary or a restraining or threading method.

Another object of the present invention is to provide such a section member assembly which can be easily disassembled for replacing portions of the truck side-boards.

According to the present invention, the above mentioned aim and objects, as well as yet other objects, which will become more apparent hereinafter are achieved by a section member assembly for making side-boards of trucks and the like, having the features of the characterizing part of the main claim.

### BRIEF DESCRIPTION OF THE DRAWINGS

Further characteristics and advantages of the section member assembly according to the present invention, will become more apparent from the following detailed description of a preferred embodiment thereof which is illustrated, by way of an indicative but not limitative example, in the figures of the accompanying drawings, where:
Figures 1 and 2 show two types of section members the end portions of which are provided with snap engaging teeth providing a male-female type of snap connection;
   further section member types including a male snap engaging or latching element;

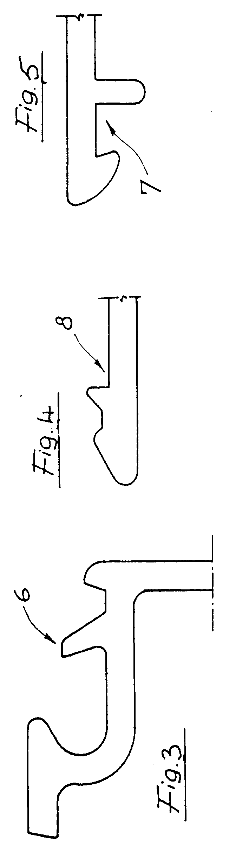

Figure 3 shows, on an enlarged scale, one of the two teeth formed at one end of a section member and providing said male connection element;

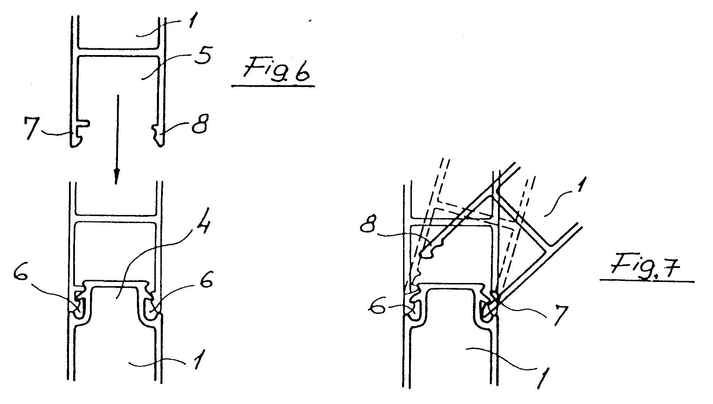

Figures 4 and 5 show, on an enlarged scale, the two teeth forming the female connection or coupling element;
Figures 6 and 7 show two possible methods for mutually engaging the above mentioned section members;

### DESCRIPTION OF THE PREFERRED EMBODIMENT

With reference to the figures of the accompanying drawings, the section member assembly according to the invention comprises section members consisting of tubular parts 1 in an intermediate position of which there is arranged a flat portion 2 which is preferably decorated by one or more pluralities of ridge lines 3.

At the end portions, in the longitudinal direction, of said section members there are respectively provided a closed portion, of less width, 4 and an open portion 5.

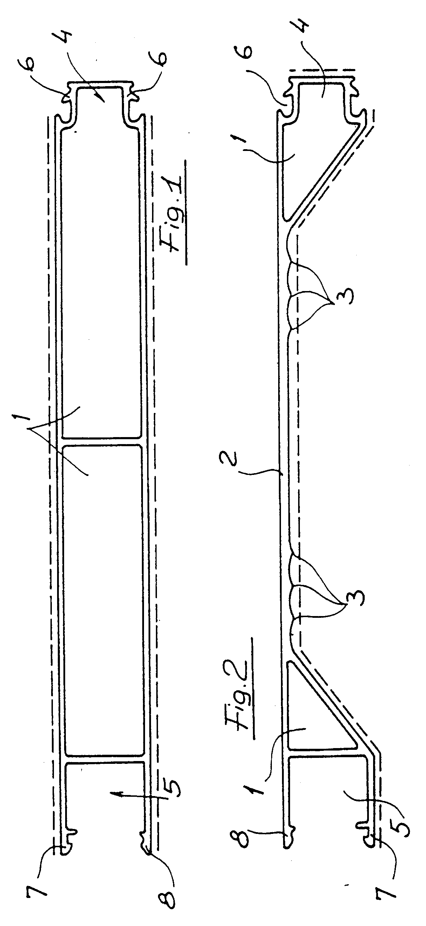

More specifically (as is shown in figures 1 and 2) on the two sides of the mentioned closed portion there are formed corresponding latching or snap engaging teeth 6 whereas, on the inner faces of the two sides of said open portion 5 there are formed restraining teeth having a suitably differentiated profile, respectively indicated at 7 and 8.

In this connection it should be pointed out that the mentioned restraining tooth bearing sides are slightly convergent so as to provide a firmer coupling with the snap engaging or latching teeth the simmetry of which, moreover, affords the possibility of reversing the function of the section members.

In particular, the section members shown in figures 1 and 2 can be mutually coupled either by a restraining method, as is shown schematically in figure 6, or by threading a side thereof and then by rotation (see figure 7).

Thus, from the above disclosure, it should be easily apparent that the subject section members can be easily and quickly coupled so as to provide a side board having a desired height.

Another feature of the invention is that the mentioned teeth have been specifically designed to also provide a clearance recovering function.

The disclosed latching and snap engaging teeth, moreover, also provide, in the side-board assembled condition, a slight tension which can eliminate possible vibrations of the truck during the driving thereof.

From the above disclosure and figures of the accompanying drawings it should be apparent that the invention fully achieves the intended aim and objects.

While the invention has been disclosed with reference to preferred embodiments thereof, it should be apparent that the disclosed embodiments are susceptible to several modifications and variations all of which will come within the scope of the appended claims.

## Claims

1. A section member assembly for making side-boards of trucks and the like, comprising section members including, at one end portion thereof, an open portion (5) and, at an opposite end portion thereof, a closed portion (4) having a width less than that of said open portion and provided for snap engaging in the open portion (5) of a like section member, characterized in that on the two opposite sides of said closed portion (4) there are provided latching teeth (6), whereas on the inner face of the two sides of said open portion (5), provided for receiving said closed portion (4) of a like section member, there are provided two restraining teeth (7, 8) having suitably differentiated profiles which can be engaged with said two latching teeth (6) to couple the section members while recovering possible clearances, said two restraining teeth (7, 8) having a contour different from that of said latching teeth and being arranged for coupling with said latching teeth (6) both by causing a section member to translate with respect to the other and by causing a said section member to partially rotate with respect to the other section member.

2. A section member assembly according to Claim 1, characterized in that said section members consist of tubular elements with an intermediate flat portion (2).

3. A section member assembly according to Claims 1 and 2, characterized in that said sides of said open portion (5) bearing said restraining teeth (7, 8) are provided with a slightly converging portion for making a firm connection with said latching teeth (6) having a shape symmetry which allows said section members to be reversed in their functions.

## Patentansprüche

1. Eine Profilteilmontage für Bordwände für Lastfahrzeuge und dergleichen, umfassend Profilteile, beinhaltend an einem Ende davon, ein offenes Teil (5), und an einem entgegengesetzten Ende davon ein geschlossenes Teil (4) mit einer Breite, die geringer ist als die dieses offenen Teiles, und bereitgestellt, um in das offene Teil (5) eines gleichen Profilteils einzurasten, dadurch gekennzeichnet, daß auf den zwei entgegengesetzten Seiten dieses geschlossenen Teiles (4) Schnappzähne (6) bereitgestellt sind, wohingegen auf der inneren Seite der beiden Seiten dieses offenen Teiles (5), bereitgestellt, um diesen geschlossenen Teil (4) eines gleichen Profilteils aufzunehmen, zwei Haltezähne (7, 8) mit in geeigneter Weise sich unterscheidenden Profilen bereitgestellt sind, die in diese zwei Schnappzähne (6) eingeklinkt werden können, um die Profilteile miteinander zu koppeln und gleichzeitig eventuelle Spielräume wiederzuerlangen, diese zwei Haltezähne (7, 8) haben Konturen, die sich von denen dieser Schnappzähne unterscheiden, und sind angeordnet, um mit diesen Schnappzähnen (6) gekoppelt zu werden, bewirkend, sowohl daß ein Profilteil bezüglich des anderen versetzt wird, als auch daß dieses Profilteil bezüglich des anderen Profilteils partiell rotiert.

2. Eine Profilteilmontage gemäß Anspruch 1, dadurch gekennzeichnet, daß diese Profilteile aus röhrenförmigen Elementen mit einem flachen Zwischenteil (2) bestehen.

3. Eine Profilteilmontage gemäß Ansprüche 1 und 2, dadurch gekennzeichnet, daß diese Seiten dieses offenen Teiles (5), das diese Haltezähne (7, 8) trägt, einen leicht konvergenten Teil bereitstellen, um eine feste Verbindung mit diesen Schnappzähnen (6) zu bewirken, deren Form eine solche Symmetrie besitzt, die die Umkehrung der Funktion dieser Profilteile erlaubt.

## Revendications

1. Assemblage d'éléments profilés pour la fabbrication de parois latérale pour camions et similaires, comportant des éléments profilés munis à une extrémité, d'une partie fermée (4), de plus petite largeur que ladite partie ouverte, et prévue pour s'enclencher à pression dans la partie ouverte (5) d'un élément profilé similaire, caractérisé en ce que les deux côtés opposés de ladite partie fermée (4) sont pourvus de dents à enclenchement (6), tandis que sur la surface intérieure des deux flancs de ladite partie ouverte (5), prévue pour recevoir ladite partie fermée (4) d'un élément profilé similaire, sont prévues deux dents de maintien (7) et (8) pourvus de profiles convenablement differenciés, qui peuvent être encastrés audits dents d'enclenchement (6) pour coupler l'assemblage d'éléments profilés tandis qu'ils regagnent les jeux possibles, qui peuvent être encastrés audits dents d'enclenchements (6), lesdits deux dents de retenue (7, 8) présentant un profil différent que celui desdites dents d'enclenchement, et étant agencées pour se coupler auxdites dents d'enclenchement (6) en provoquant à la foi la translation d'un élément profilé par rapport à l'autre et la rotation partielle d'un élément profilé par rapport à l'autre élément profilé.

2. Assemblage d'éléments profilés selon la revendication 1, caractérisé en ce que lesdits éléments profilés sont des éléments tubulaires avec une partie intermédiaire plate (2).

3. Assemblage d'éléments profilés selon les revendications 1 et 2, caractérisé en ce que lesdits côtés de ladite partie ouverte (5), portant lesdites dents de retenue (7, 8), sont pourvus d'une partie convergeant légèrement pour obtenir une connexion rapide avec lesdites dents d'engagement (6) de forme symétrique qui permet aux éléments profilés d'avoir des fonctions inversées.
